Europäisches Patentamt

European Patent Office

Office européen des brevets

(11) Veröffentlichungsnummer: **0 162 191**
**A1**

(12) **EUROPÄISCHE PATENTANMELDUNG**

(21) Anmeldenummer: **85101259.1**

(22) Anmeldetag: **07.02.85**

(51) Int. Cl.⁴: **F 16 F 1/18**

(30) Priorität: **30.04.84 DE 3416022**

(43) Veröffentlichungstag der Anmeldung:
**27.11.85 Patentblatt 85/48**

(84) Benannte Vertragsstaaten:
**AT BE CH DE FR GB IT LI LU NL SE**

(71) Anmelder: **Hoesch Aktiengesellschaft**
**Eberhardstrasse 12**
**D-4600 Dortmund 1(DE)**

(72) Erfinder: **Fischer, Friedhelm**
**Letmather Strasse 25**
**D-5840 Schwerte 5(DE)**

(54) **Federblatt insbesondere für die Abfederung von Fahrzeugen.**

㉗ Bei einem Federblatt, insbesondere für die Abfederung von Fahrzeugen, bestehend aus einem kunststoffteil und aus einem durchgehenden Metallteil mit aus Federauge und/oder Gleitende ausgebildeten Federenden, ist der Kunststoffteil (4, 5) aus Faserverbundwerkstoff ober- und/oder unterseitig des Metallteiles (7, 9) angeordnet und an der gesamten Berührungsfläche (6) mit dem Metallteil fest verbunden, um unter Ausnutzung der typischen Vorteile sowohl eines Metall- als auch eines Faserverbundwerkstoff-Federblattes auch den Kunststoffteil zur Übertragung von Radführungskräften heranzuziehen und die werkstoffmäßig möglichen Beanspruchbarkeiten beider Federteile zu verbessern.

Fig.1

0162191

Hoesch Werke Aktiengesellschaft
Eberhardstraße 12, 4600 Dotmund 1


Federblatt, insbesondere für die Abfederung von Fahrzeugen


Die Erfindung betrifft ein Federblatt, insbesondere für die Abfederung von Fahrzeugen, welches aus einem Kunststoffteil und aus einem durchgehenden Metallteil mit als Federauge und/ oder Gleitende ausgebildeten Federenden besteht.

Blattfedern aus Faserverbundwerkstoff (FVW) weisen den Vorteil eines geringeren Gewichts gegenüber Metall-Blattfedern auf. Sie benötigen jedoch einen besonderen konstruktiven Aufwand bezüglich der Krafteinleitungen an den Federenden und der Mittenauflage.

Die DE-OS 32 36 330 schlägt zur Lösung dieser bei FVW- Blattfedern auftretenden Krafteinleitungsprobleme vor, als Hauptblatt ein Stahlfederblatt zu verwenden, das allein zur Übertragung der auftretenden Radführungskräfte geeignet ist, da diese wegen der üblichen Verbindung durch Federklammern oder Zentrierbolzen zwischen Metall- und Kunststoffteil nicht übertragen werden können. Nachteilig ist die Notwendigkeit von mindestens zwei Federblättern, wobei jedes Federblatt bei Biegebeanspruchung seine eigene neutrale Faser aufweist. Die Materialien können demnach nur an den Blattoberseiten mit den ihnen eigenen maximal zulässigen Spannungen ausgenutzt werden, während die Ausnutzung der an sich vom Material her möglichen Beanspruchbarkeit von den Blattoberseiten in Richtung auf die jeweilige neutrale Faser hin durch die abnehmenden Spannungen immer schlechter wird.

Der Erfindung liegt die Aufgabe zugrunde, unter Ausnutzung der typischen Vorteile sowohl eines Metall- als auch eines Faserverbundwerkstoff-Federblattes auch den Kunststoffteil zur Übertragung von Radführungskräften heranzuziehen und die werkstoffmäßig möglichen Beanspruchbarkeiten beider Federteile zu verbessern.

Gemäß der Erfindung wird dazu bei einem Federblatt der eingangs näher bezeichneten Gattung vorgeschlagen, daß der Kunststoffteil aus Faserverbundwerkstoff ober- und/oder unterseitig des Metallteiles angeordnet und an der gesamten Berührungsfläche mit dem Metallteil fest verbunden ist.

Die mit der Erfindung erzielten Vorteile ergeben sich insbesondere dadurch, daß aus einem in erster Näherung isotropen, d. h. in allen Richtungen gleich beanspruchbaren Werkstoff (Metall) und einem gewichtsgünstigen, jedoch anisotropen, d. h. in den einzelnen Richtungen unterschiedliche beanspruchbaren Material (FVW) hinsichtlich der Kraftübertragung eine Einheit mit gemeinsamer neutraler Faser gebildet wird.

Mit dem Metallteil werden vorteilhaft die üblichen Endenausführungen, wie Blattfederaugen oder Gleitenden, kostengünstig gefertigt. Die bekannten konstruktiven Lösungen zur Krafteinleitung in die Federenden können vollständig übernommen werden.

Zusatzbeanspruchungen, die neben der Hauptbiegebeanspruchung (vertikal) vorhanden sind, werden vornehmlich durch den für hohe Spannungen geeigneten Metallteil übertragen. Da andererseits die ertragbaren Dehnungen von geeigneten FVW größer sind als die der verwendbaren Metalle, bietet die Anordnung des Kunststoffteiles oberseitig und/oder unterseitig vom
Metallteil eine technisch besonders zweckmäßige, die Stärken beider Materialien ausnutzende Lösung.

Ein besonderer Vorteil ergibt sich, wenn der Kunststoffteil
nur oberseitig vom Metallteil angeordnet wird. Durch den
unterschiedlichen Elastizitätsmodul des FVW und des Metalls
wird die gemeinsame neutrale Faser bezüglich vertikaler
Biegung zum Material mit dem höheren Elastizitätsmodul hin
aus der Mitte verlagert. Der Metallteil bildet bei Biegung
durch Belastung von oben vornehmlich die Druckseite des
Federblattes, während das FVW-Teil vornehmlich die Zugseite
darstellt. Je nach dem Dickenverhältnis des FVW-Teils zum
Metallteil befindet sich die neutrale Faser im FVW-Teil, in
der gemeinsamen Berührungsfläche oder im Metallteil. Die
höchsten Beanspruchungen an der zug- bzw. druckseitigen
Oberfläche des Federblattes werden jedoch immer von dem
hierfür geeigneteren Werkstoff aufgenommen. So stützt z. B.
bei Lage der neutralen Faser im FVW-Teil der Metallteil das
FVW-Teil gegen Ausknicken seiner Fasern, die sich unterhalb
der neutralen Faser im Druckbereich befinden. Bei Lage der
neutralen Faser im Metallteil wiederum vermeidet z. B. der
FVW den Korrosionsangriff im Zugbereich des Metallteils.
Somit wird die Lebensdauer des erfindungsgemäßen Federblattes wesentlich erhöht.

In weiterer Ausgestaltung des Erfindungsgedankens kann vorteilhaft die Verbindung von Kunststoffteil und Metallteil
durch die Harzkomponente des Faserverbundwerkstoffes erfolgen.

Entsprechend dem jeweiligen Anwendungsfall kann weiterhin
der Metallteil über die Länge eine konstante oder inkonstante
Dicke aufweisen.

0162191

In ähnlicher Weise kann auch der Kunststoffteil eine von den
Federenden linear oder kurvenförmig zunehmende Dicke aufweisen.

Bei nur oberseitig des Metallteiles angeordnetem Kunststoffteil wird nur der Metallteil von einem Zentrierbolzen durchgriffen, da die Auflage des Federblattes mit seinem Metallteil auf der Unterseite den Vorteil hat, daß keine besonderen Maßnahmen bezüglich gleichmäßiger Druckverteilung in
der Mittenauflagefläche einer Fahrzeugachse notwendig sind,
wie es sonst bei FVW-Teilen zur Vermeidung von Faserbeschädigungen unumgänglich ist. Die Anordnung eines Zentrierbolzens zur Zentrierung des Federblattes auf der Mittenauflage kann also wie bei einem Metallfederblatt vorgenommen
werden.

Ferner ist es vorteilhaft möglich, mehrere der erfindungsgemäß ausgebildeten Federblätter zu einem mehrlagigen Federpaket
zusammenzufassen.

Nachstehend wird die Erfindung anhand von schematisch dargestellten Ausführungsbeispielen näher beschrieben. Es zeigen

Fig. 1    ein Federblatt mit oberseitig und unterseitig vom
          Metallteil angeordneten Kunststoffteilen.

Fig. 2    ein Federblatt mit oberseitig vom Metallteil angeordnetem Kunststoffteil.

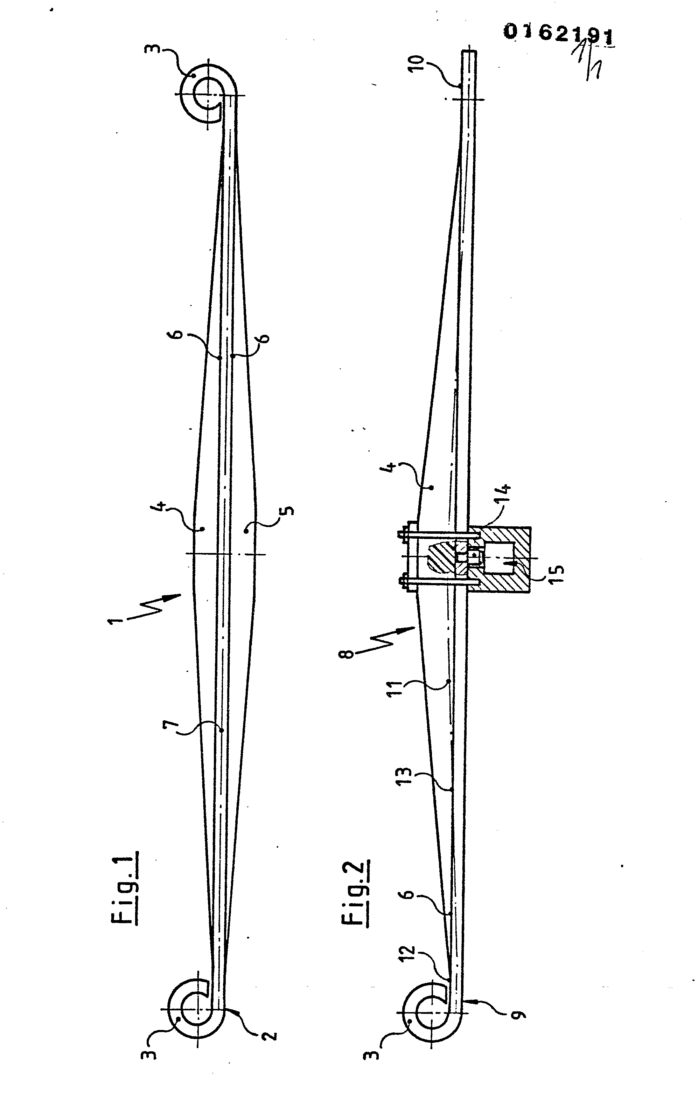

Gemäß Fig. 1 hat das Federblatt 1 ein durchgehendes Metallteil 2, welches an den Federenden zu Federaugen 3 oder
Gleitenden ausgeformt ist und z. B. aus vergütetem Federstahl
besteht. Oberseitig und unterseitig ist das Metallteil 2 mit
je einem Kunststoffteil 4, 5 aus Faserverbundwerkstoff

(FVW), z. B. glasfaserverstärktem Kunststoff (GFK), an den
Berührungsflächen 6 ganzflächig fest verbunden. Der FVW
bedeckt nur die eigentlichen Berührungsflächen 6 und läßt die
Federaugen bzw. Gleitenden frei. Die Verbindung von Metallteil 2 und FVW-Kunststoff-Teilen 4, 5 erfolgt vorzugsweise
durch die Harzkomponente des FVW. Der Metallteil 2 weist
über die Länge eine konstante Dicke auf, während die Dicke
der Kunststoffteile 4, 5 von der Mitte zu den Federaugen 3
hin abnimmt. Bei symmetrischem Querschnittsaufbau verläuft
die gemeinsame neutrale Faser 7 in der Mitte des Metallteils
2.

Fig. 2 zeigt ein Federblatt 8 mit einem durchgehenden Metallteil 9, welches an einem Federblattende zu einem Federauge 3
ausgeformt ist und am anderen Federblattende ein Gleitende 10
aufweist. Der Metallteil 9 ist nur oberseitig mit dem Kunststoffteil 4 im Bereich der Berührungsfläche 6 verbunden.
Durch den unsymmetrischen Querschnittsaufbau verläuft die
gemeinsame neutrale Faser 11 in der dargestellten Weise. Am
Federauge 3 liegt die neutrale Faser in der Mitte des Metallteilquerschnitts. Mit dem Anfang 12 des Kunststoffteils
4 beginnt sich auch die neutrale Faser 11 der gemeinsamen
Berührungsfläche 6 zu nähern und durchquert diese bei einem
bestimmten Querschnittverhältnis im Schnittpunkt 13, um
danach im Kunststoffteil 4 bis zur Federmitte weiterzulaufen. Von dort beginnt der umgekehrte Verlauf bis zum
Gleitende 10.

In Federmitte ist an dem Metallteil 9 ein Zentrierbolzen 14
angeordnet, der nur den Metallteil 9 durchgreift und das
Federblatt 8 auf einer Mittenauflage 15 der Achse zentriert.

1 Federblatt

2 Metallteil

3 Federauge

4 Kunststoffteil

5 Kunststoffteil

6 Berührungsfläche

7 neutrale Faser

8 Federblatt

9 Metallteil

10 Gleitende

11 neutrale Faser

12 Anfang des Kunststoffteiles

13 Schnittpunkt

14 Zentrierbolzen

15 Mittenauflage

Hoesch Werke Aktiengesellschaft
Eberhardstraße 12, 4600 Dortmund 1

Ansprüche

1. Federblatt, insbesondere für die Abfederung von Fahrzeugen, bestehend aus einem Kunststoffteil und aus einem durchgehenden Metallteil mit als Federauge und/oder Gleitende ausgebildeten Federenden, dadurch gekennzeichnet, daß der Kunststoffteil (4, 5) aus Faserverbundwerkstoff ober- und/oder unterseitig des Metallteiles (7, 9) angeordnet und an der gesamten Berührungsfläche (6) mit dem Metallteil fest verbunden ist.

2. Federblatt nach Anspruch 1, dadurch gekennzeichnet, daß die Verbindung durch die Harzkomponente des Faserverbundwerkstoffes erfolgt.

3. Federblatt nach den Ansprüchen 1 und 2, dadurch gekennzeichnet, daß der Metallteil (7, 9) über die Länge konstante Dicke aufweist.

4. Federblatt nach Ansprüchen 1 und 2, dadurch gekennzeichnet, daß der Metallteil über die Länge inkonstante Dicke aufweist.

5. Federblatt nach den Ansprüchen 1, 2 und 3 oder 4, dadurch gekennzeichnet, daß der Kunststoffteil (4, 5) eine von den Federenden linear zunehmende Dicke aufweist.

6. Federblatt nach den Ansprüchen 1, 2 und 3 oder 4, dadurch gekennzeichnet, daß der Kunststoffteil eine von den Federenden kurvenförmig zunehmende Dicke aufweist.

0162191

7. Federblatt nach einem oder mehreren der vorstehenden Ansprüche, dadurch gekennzeichnet, daß bei nur oberseitig des Metallteils (9) angeordnetem Kunststoffteil (4) nur der Metallteil von einem Zentrierbolzen (14) durchgriffen wird.

8. Federblatt nach einem oder mehreren der vorstehenden Ansprüche, dadurch gekennzeichnet, daß es in mehrfacher Anordnung zu einem Federpaket zusammengefaßt ist.

0162191

Fig.1

Fig.2

| | Europäisches Patentamt | **EUROPÄISCHER RECHERCHENBERICHT** | **0162191** Nummer der Anmeldung |
|---|---|---|---|
| | | | EP 85 10 1259 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENTS ABSTRACTS OF JAPAN, Band 3, Nr. 101 (M-70), 25. August 1979, Seite 3 M 70; & JP - A - 54 74 058 (TORAY K.K.) 13.06.1979 | 1-3 | F 16 F 1/18 |
| X | US-A-3 698 702 (LORD CORP.) \* Spalte 2, Zeile 65 - Spalte 3, Zeile 34; Abbildungen 2,4,6 \* | 1,3,5, 6 | |
| A | | 2 | |
| P,A | GB-A-2 125 514 (THE BUDD CO.) \* Seite 3, Zeilen 60-93; Abbildungen 3,4 \* | 1,3,5- 7 | |
| A | PATENTS ABSTRACTS OF JAPAN, Band 5, Nr. 206 (M-104)[878], 26. Dezember 1981; & JP - A - 56 120 835 (NIPPON HATSUJIYOU K.K.) 22.09.1981 | 1,8 | RECHERCHIERTE SACHGEBIETE (Int. Cl.4) F 16 F 1/00 B 60 G 11/00 |
| A | PATENTS ABSTRACTS OF JAPAN, Band 4, Nr. 76 (M-14)[558], 3. Juni 1980, Seite 23 M 14; & JP - A - 55 36 644 (NIPPON HATSUJIYOU K.K.) 14.03.1980 ---          -/- | 1,8 | |

Der vorliegende Recherchenbericht wurde für alle Patentansprüche erstellt.

| Recherchenort DEN HAAG | Abschlußdatum der Recherche 07-08-1985 | Prüfer KEEN C.H. |
|---|---|---|

Europäisches
Patentamt

EUROPÄISCHER RECHERCHENBERICHT

0162191
Nummer der Anmeldung

EP 85 10 1259

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 236 330 (STEYR-DAIMLER-PUCH AG) --- | | |
| A | PATENTS ABSTRACTS OF JAPAN, Band 4, Nr. 60 (M-10)[542], 6. Mai 1980, Seite 146 M 10; & JP - A - 55 27 522 (TOYOTA JIDOSHA KOGYO K.K.) 27.02.1980 ----- | | |
| | | | RECHERCHIERTE SACHGEBIETE (Int. Cl.4) |

Der vorliegende Recherchenbericht wurde für alle Patentansprüche erstellt.

| Recherchenort DEN HAAG | Abschlußdatum der Recherche 07-08-1985 | Prüfer KEEN C.H. |
|---|---|---|